## Europäisches Patentamt
## European Patent Office
## Office européen des brevets

(11) Veröffentlichungsnummer: **0 039 370**
**B1**

(12) **EUROPÄISCHE PATENTSCHRIFT**

(45) Veröffentlichungstag der Patentschrift: **19.12.84**

(51) Int. Cl.³: **G 01 F 15/00, F 16 J 15/00**

(21) Anmeldenummer: **80102488.6**

(22) Anmeldetag: **07.05.80**

(54) **Feuerfeste Abdichtung bei Gasmessgeräten.**

(73) Patentinhaber: **G. Kromschröder Aktiengesellschaft Jahnplatz 6 D-4500 Osnabrück (DE)**

(72) Erfinder: **Berthke, Heinrich Sternstrasse 13 D-4512 Wallenhorst 1 (DE)**
Erfinder: **Pohl, Werner An der Rennbahn 50 D-4535 Westerkappeln (DE)**

(74) Vertreter: **Weisse, Jürgen, Dipl.-Phys. et al Bökenbusch 41 Postfach 11 03 86 D-5620 Velbert 11-Langenberg (DE)**

(43) Veröffentlichungstag der Anmeldung: **11.11.81 Patentblatt 81/45**

(45) Bekanntmachung des Hinweises auf die Patenterteilung: **19.12.84 Patentblatt 84/51**

(84) Benannte Vertragsstaaten: **DE FR GB IT NL**

(56) Entgegenhaltungen:
**DE-A-1 907 641
FR-A- 867 139
FR-A- 868 188
LU-A- 61 569**

**Die Akte enthält technische Angaben, die nach dem Eingang der Anmeldung eingereicht wurden und die nicht in dieser Patentschrift enthalten sind.**

Courier Press, Leamington Spa, England.

**Beschreibung**

Die Erfindung betrifft eine feuerfeste Abdichtung bei Gasmeßgeräten nach dem Oberbegriff von Patentanspruch 1 oder Patentanspruch 2.

Eine solche Abdichtung ist bekannt durch die FR—A—868 188.

Bei dieser bekannten Anordnung werden zwei Gehäuseteile mittels miteinander vernieteter Flansche miteinander verbunden. In einem der Flansche wird eine Sicke gebildet, deren Ausbuchtung zum gegenüberliegenden Flansch hin gerichtet ist. Diese Sicke entsteht dadurch, daß der Flansch unmittelbar anschließend an die Gehäusewandung einen rechtwinklig zu dieser verlaufenden Abschnitt, daran anschließend einen im wesentlichen parallelen zur Gehäusewandung verlaufenden Rand und dann an diesen Rand anschließend einen radial nach außen verlaufenden Abschnitt aufweist. Der an die Gehäusewandung anschließende Abschnitt und der besagte Rand bilden die Sicke. Der andere Flansch bildet eine zu der Sicke im wesentlichen komplementäre Stufe, die bei einer der verwendeten Versionen durch ein an der Gehäusewandung zusätzlich angebrachtes Metallband zu einem U-förmigen Profil ergänzt ist. Zwischen der Sicke und der Stufe ist ein Dichtring aus einem sehr plastischen Material, wie Kautschuk, vorgesehen. Dieser Dichtring wird beim Zusammenziehen und Vernieten der Flansche zu einer Schicht flachgedrückt. Am äußeren Umfang weisen beide Flansche übereinandergreifende abgewinkelte Ränder auf.

Bei der bekannten Anordnung erfolgt die Dichtung durch Kautschuk o.dgl., also ein nichtfeuerfestes Material, so daß bei hohen Temperaturen im Brandfall diese Dichtung zerstört wird. Die Sicke kann nicht an ihrem starren Gegenstück, nämlich der Stufe des anderen Flansches, anliegen, da sie in einem den flachgedrückten Dichtring aufnehmenden Abstand von diesem gehalten wird. Ein metallischer Kontakt ergibt sich zwischen den miteinander vernieteten äußeren Abschnitten der Flanche. Da diese aber großflächig aneinander anliegen, ergibt sich keine Flächenpressung, die zu einer für den Brandfall ausreichenden Dichtheit führen würde.

Durch die DE—A—1 907 641 ist es bekannt, bei einer Dichtung zwischen Druckflächen von Flanschverbindungen bei Behältern, die hohen Temperaturen ausgesetzt sind, ein Stützteil aus feuerfestem Material (Asbest) vorzusehen.

Es ist bekannt, die Gehäuse von Balgengaszählern aus dünnem Stahlblech herzustellen. Das Gehäuse besteht dabei aus zwei tiefgezogenen, topfförmigen Gehäusehälften die an ihren Rändern miteinander verbunden sind. Diese Verbindung erfolgt bekanntermaßen durch Weichlöten oder durch Verfalzen mit einem zusätzlichen Dichtmittel. Im letzten Falle weise eine Gehäusehälfte einen sich radial nach außen erstreckenden Flansch auf. Die andere Gehäusehälfte besitzt ebenfalls einen Flansch, der unter Zwischenlage einer Dichtung an dem Flansch der ersteren Gehäusehälfte anliegt und etwa die doppelte Breite wie dieser besitzt. Dieser breitere Flansch ist um den anderen Flansch herumgefalzt, so daß die beiden Gehäusehälften gasdicht miteinander verbunden werden.

Solche Verbindungen sollen im normalen Betrieb gasdicht sein. Es soll aber auch im Brandfall bei hohen Temperaturen von z.B. 700°C bis 800°C über eine bestimmte Zeit von beispielsweise 30 Minuten hinweg nur eine sehr geringe Leckage von etwa 100 bis 200 Liter pro Stunde auftreten. Schließlich sollte die Verbindung reparaturfreundlich sein, d.h. die Verbindung sollte ohne besonderen Werkzeugaufwand demontiert und wieder zusammengebaut werden können.

Eine Verbindung durch Weichlöten ist weder feuerfest noch reparaturfreundlich.

Eine Verbindung durch Verfalzen kann zwar auch im Brandfalle hinreichend dicht gehalten werden. Sie ist aber praktisch kaum für Reparaturzwecke demontierbar und dann wieder herstellbar.

Der Erfindung liegt die Aufgabe zugrunde, eine Abdichtung für Gasmeßgeräte zu schaffen, die Feuerfestigkeit mit Reparaturfreundlichkeit verbindet.

Nach einer Ausführung der Erfindung wird diese Aufgabe bei einer Abdichtung nach dem Oberbegriff des Patentanspruchs 1 dadurch gelöst, daß die Sicke unmittelbar an den gegenüberliegenden Flansch angepreßt ist.

Nach einer anderen Ausführungsform der Erfindung wird diese Aufgabe bei einer Abdichtung nach dem Oberbegriff des Patentanspruchs 2 dadurch gelöst, daß die Sicken der beiden Flansche einander entgegengerichtet und fluchten sind und daß sie unmittelbar aneinander oder an ein dazwischenliegendes steifes Dichtglied aus feuerfestem Material angepreßt sind.

Die Abdichtung enthält also zwei aneinander anliegende Flansche. Dadurch, daß wenigstens einer der Flansche eine Sicke aufweist, wird einmal dieser Flansch mechanisch versteift. Zum anderen wird die Fläche vermindert, mit welcher dieser Flansch an dem anderen Flansch bzw. dem Dichtglied anliegt. Damit wird bei gleicher Klemmkraft die Flächenpressung erhöht. Es kann dadurch eine Abdichtung mit Metall auf Metall oder auf einem relativ steifen feuerfesten Dichtglied so erfolgen, daß die für den Brandfall geforderte Dichtheit erreicht wird.

Durch die LU—A—61 569 ist eine Abdichtung zur dichten Verbindung von Rohrstücken bekannt, bei welcher an den beiden Rohrstücken Flansche mit einander entgegengerichteten fluchtenden Sicken angebracht sind. Die Flansche sind mit Schrauben und Muttern unter Zwischenlage eines Dichtgliedes gegeneinandergezogen. Das Dichtglied ist dabei aber nicht starr sondern zusammendrückbar. Es ist dort auch nichts über Feuerfestigkeits gesagt.

Weitere Ausgestaltungen der Erfindung sind Gegenstand der Ansprüche 3 bis 7.

Zwei ausführungsbeispiele der Erfindung sind nachstehend unter Bezugnahme auf die zugehörigen Zeichnungen näher erläutert:

Fig. 1 zeigt einen Schnitt durch eine erste Ausführungsform einer feuerfesten Abdichtung.

Fig. 2 zeicht einen Schnitt ähnlicht Fig. 1 durch eine zweite Ausführung.

Mit 10 ist eine obere Gehäusehälfte aus dünnem Stahlblech bezeichnet und mit 12 eine ebenfalls dünnem Stahlblech bestehende untere Gehäusehälfte. Die obere Gehäusehälfte 10 weist einen breiten Flansch 14 auf, dessen äußerer Rand 16 nach unten umgebogen ist. In dem Flansch 14 ist eine sich nach unten wölbende Sicke 18 vorgesehen, die sich rings um die Gehäusehälfte 10 längs des Flansches 14 erstreckt. An der unteren Gehäusehälfte 12 ist ein Flansch 20 vorgesehen, dessen äußerer Rand 22 ebenfalls nach unten umgebogen ist. Der umgebogene Rand 16 des Flansches 14 erstreckt sich dabei über den umgebogenen Rand 22 des Flansches 20. Der Flansch 20 weist eine rundumlaufende Sicke 24 auf, die sich nach oben in Richtung auf den Flansch 14 wölbt und mit der Sicke 18 des Flanches 14 fluchtet. Zwischen die Flansche 14 und 20 ist ein relativ steifes Dichtglied 26 aus feuerfestem Material eingelegt. Das Dichtglied 26 kann beispeilsweise aus einer Asbestplatte bestehen, die eine Ringscheibe bildet. An diesem Dichtglied 26 liegen die Sicken 18 und 24 an. Neben den Sicken 18 und 24 ist zwischen dem Flansch 14 und dem Dichtglied 26 eine Dichtung 28 aus einen weichen Dichtmaterial vorgesehen. Eine ebensolche Dichtung 30 befindet sich zwischen dem Dichtglied 26 und dem Flansch 20 neben der Sicke 24. Bei diesen Dichtungen 28, 30 handelt es sich vorzugsweise um eine weiche Dichtmasse, wie sie z.B. für die Fugendichtung verwendet wird.

Die beiden Flansche 14 und 20 werden durch Schrauben 32 und Muttern 34 gegeneinandergezogen. Die Schrauben 32 haben abgerundete Köpfe 36, und die Muttern 34 sind innerhalb der abgewinkelten Ränder 16, 22 angeordnet, Auf diese Weise werden vorstehende Teile und scharfe Kanten vermieden.

Die Sicken 18 und 24 bringen eine Versteifung der Flansche 14 und 20. Sie erhöhen ferner die Flächenpressung zwischen den Flanschen 14 bzw. 20 und dem Dichtglied 26 und verbessert damit die auch im Brandfall wirksame Abdichtung. Das Dichtglied 26 verbessert zusätzlich die Steifigkeit der ganzen Flanschanordnung und erleichtert die Montage. Die Dichtungen 28 und 30 gewährleisten eine sichere Abdichtung im normalen Betrieb. Die beschriebene Anordnung gestattet eine leichte Montage und Demontage.

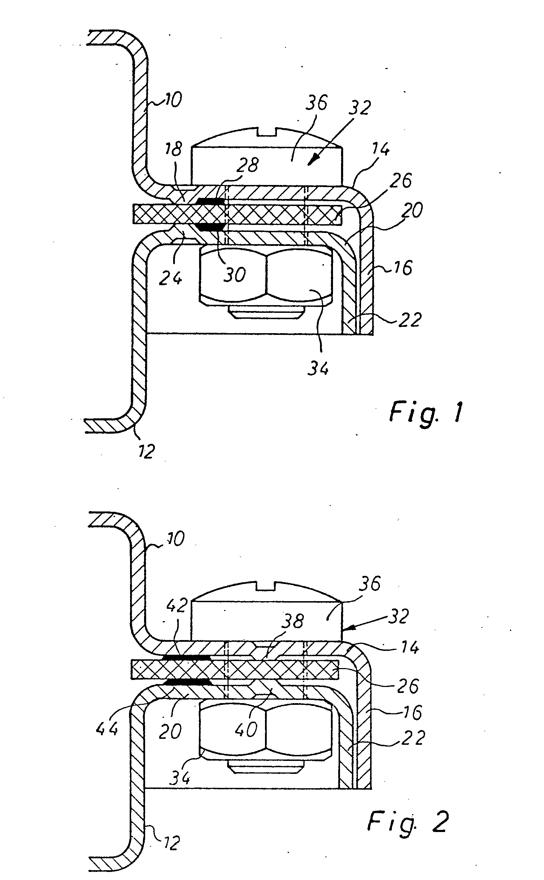

Bei der Anordnung nach Fig. 1 sind die Sicken 18, 24 längs des Innenrandes der Flansche 14 und 20 angeordnet, und die Schrauben 32 sind radial auswärts von den Sicken 18, 24 vorgesehen. Die Dichtungen 28, 30 sitzen radial auswärts von den Sicken 18, 24 und grenzen unmittelbar an diese an.

Die Ausführungsform nach Fig. 2 ist ähnlich der von Fig. 1, und entsprechende Teile sind in beiden Figuren mit den gleichen Bezugszeichen versehen. Bei der Ausführungsform nach Fig. 2 sind die Sicken 38, 40 der Flansche 14, 20 etwa in der Mitte der Flansche 14, 20 angeordnet. Die Achsen der Schrauben 32 liegen etwa auf der Mittelfläche der Sicken 38, 40. Die Dichtungen 42, 44 aus weichem Dichtungsmaterial liegen radial einwärts von den Sicken 38, 40.

Die Erfindung kann in verschiedener Weise abgewandelt werden.

Es ist möglich, nur einen Flansch, z.B. den Flansch 14 mit einer Sicke 18 zu versehen, während der andere Flansch 20 keine Sicke aufweist. Statt einer Sicke in jedem Flansch können zwei Sicken vorgesehen sein, von denen die eine radial auswärts von der anderen verläuft. Es kann ggf. das Dichtglied 26 weggelassen werden, so daß die Sicken 18 und 24 oder eine Sicke 18 und der Flansch 20 mit metallischem Kontakt unmittelbar aneinander anliegen.

**Patentansprüche**

1. Feuerfeste Abdichtung bei Gasmeßgeräten, die ein aus dünnem Stahlblech hergestelltes Gehäuse aufweisen, welches aus zwei Gehäusehälften (10, 12) besteht, die durch gegeneinandergezogene Flansche (14, 20) miteinander verbunden sind, wobei einer der Flansche (14) ein ringsumlaufende Sicke (18) aufweist, deren Ausbuchtung zum gegenüberliegenden Flansch hin gerichtet ist, dadurch gekennzeichnet, daß die Sicke (18) unmittelbar an den gegenüberliegenden Flansch (20) angepreßt ist.

2. Feuerfeste Abdichtung bei Gasmeßgeräten, die ein aus dünnem Stahlblech hergestelltes Gehäuse aufweisen, welches aus zwei Gehäusehälften (10, 12) besteht, die durch gegeneinandergezogene Flansche (14, 20) miteinander verbunden sind, wobei die beiden Flansche (18, 20) ringsumlaufende Sicken (18, 24) aufweisen, dadurch gekennzeichnet, daß die Sicken (18, 24) der beiden Flansche (14, 20) einander entgegengerichtet und fluchtend sind und daß sie unmittelbar aneinander oder an ein dazwischenliegendes steifes Dichtglied (26) auf feuerfestem Material angepreßt sind.

3. Feuerfeste Abdichtung nach Anspruch 1 oder 2, dadurch gekennzeichnet, daß die beiden Flansche (14, 20) durch Schrauben (32) und Muttern (34) gegeneinandergezogen sind.

4. Feuerfeste Abdichtung nach Anspruch 2, dadurch gekennzeichnet, daß das Dichtglied (26) aus feuerfestem Material eine Asbestplatte ist.

5. Feuerfeste Abdichtung nach Anspruch 1, dadurch gekennzeichnet, daß zwischen den Flanschen (14, 20) neben der Sicke (18) eine Dichtung aus einem weichen Dichtmaterial (28, 30) vorgesehen ist.

6. Feuerfeste Abdichtung nach Anspruch 2, dadurch gekennzeichnet, daß zwischen den Flanschen (14, 20) und dem Dichtglied (26) aus feuerfestem Material neben den Sicken (18, 24) je eine Dichtung (28, 30) aus einem weichen Dichtmaterial vorgesehen ist.

7. Feuerfeste Abdichtung nach Anspruch 3, dadurch gekennzeichnet, daß die Flansche (14, 20) mit abgewinkelten Rändern (16, 22) versehen sind, wobei der Rand (16) des einen Flansches (14) über den des anderen greift, und daß die Schrauben (32) abgerundete Köpfe (36) besitzen und die Muttern (34) innerhalb der abgewinkelten Ränder (16, 22) angeordnet sind.

## Revendications

1. Etanchement résistant au feu dans des appareils de mesure de gaz qui possèdent un boîtier construit de tôle fine d'acier et consistant de deux parties de boîtier (10, 12) qui sont reliées par des flasques (24, 20) tirées l'une contre l'autre, l'une des flasques (14) ayant une moulure (18) circonférentielle dont la courbure est dirigée vers la flasque opposée, caractérisé par le fait que la moulure (18) est directement pressée contre la flasque opposée (20).

2. Etanchement résistant au feu dans des appareils de mesure de gaz qui possèdent un boîtier construit de tôle fine d'acier et consistant de deux parties de boîtier (10, 12) qui sont reliées par des flasques (14, 20) tirée l'une contre l'autre, les deux flasques (18, 20) ayant des moulures (18, 24) circonférentielles, caractérisé par le fait que les moulures (18, 24) des deux flasques (14, 20) sont opposées et alignées et qu'elles sont pressées soit directement l'une contre l'autre soit contre un élément d'étanchement (26) rigid interposé d'une matière réfractaire.

3. Etanchement résistant au feu selon la revendication 1 ou 2, caractérisé par le fait que les deux flasques (14, 20) sont tirées l'une contre l'autre par des vis (32) et des écrous (34).

4. Etanchement résistant au feu selon la revendication 2 caractérisé par le fait que l'élément d'étanchement (26) d'une matière réfractaire est une plaque en amiante.

5. Etanchement résistant au feu selon la revendication 1, caractérisé par le fait qu'un étanchement d'une matière d'étanchéité souple (28, 30) est prévu entre les flasques (14, 20) à côté de la moulure (18).

6. Etanchement résistant au feu selon la revendication 2, caractérisé par le fait qu'un etanchement (28, 30) d'une matière d'étanchement souple est prévu chaque fois entre les flasques (14, 20) et l'élément d'étanchement (26) de matière réfractaire, à côté des moulures (18, 24).

7. Etanchement résistant au feu selon la revendication 3, caractérisé par le fait que les flasques (14, 20) sont munies debords recoudés (16, 22) le bord (16) de l'une des flasques (14) s'étendant au-delà du bord de l'autre, et que les vis (32) possèdent des têtes arrondies (36), et que les écrous (34) sont disposés à l'intérieur des bords recoudés (16, 22).

## Claims

1. Fireproof sealing in gas meters including a housing made of thin sheet steel and comprising of two housing portions (10, 12) connected by flanges (14, 20) drawn one against the other, one of the flanges (14) having a circumferential bead (18), the projecting portion of which is directed to the opposite flange, characterised in that the bead (18) is directly pressed against the opposite flange (20).

2. Fireproof sealing in gas meters including a housing made of thin sheet steel and comprising two housing portions (10, 12) connected by flanges (14, 20) which are drawn one against the other and which have circumferential beads (18, 24), characterised in that the beads (18, 24) of the two flanges (14, 20) are opposite and aligned to each other and that they are pressed directly one against the other or against a rigid sealing member (26) placed therebetween and made of refractory material.

3. Fireproof sealing as set forth in Claim 1 or 2, characterised in that the two flanges (14, 20) are drawn one against the other by means of screws (32) and nuts (34).

4. Fireproof sealing as set forth in Claim 2, characterised in that the sealing member (26) made of refractory material is an asbestos plate.

5. Fireproof sealing as set forth in Claim 1, characterised in that a sealing made of soft sealing material (28, 30) is provided between the flanges (14, 20) adjacent the bead (18).

6. Fireproof sealing as set forth in Claim 2, characterised in that a respective sealing (28, 30) made of soft sealing material is provided adjacent each one of the beads and between each one of the flanges (14, 20) and the sealing member (26) made of refractory material.

7. Fireproof sealing as set forth in Claim 3, characterised in that the flanges (14, 20) are provided with bent rims (16, 22), the rim (16) of one of the flanges (14) overlapping the rim of the other flange, and that the screws (32) have rounded heads (36) and the nuts (34) are arranged within the bent rims (16, 22).

*Fig. 1*

*Fig. 2*